# EUROPEAN PATENT APPLICATION

(11) **EP 3 972 092 A1**
(43) Date of publication of application: **23.03.2022**
(21) Application number: 21196566.0
(22) Date of filing: 14.09.2021
(51) Int. Cl.: H02K 5/10, H02K 15/14, H02K 5/124, F16J 15/3268

(54) **TRANSPORT COVER, ARRANGEMENT WITH A TRANSPORT COVER AND WITH AN ELECTRIC MACHINE AND METHOD FOR OPERATING AN ELECTRIC MACHINE**

(30) Priority: 17.09.2020 DE 102020124287
(71) Applicant: Valeo Siemens eAutomotive Germany GmbH, 91056 Erlangen (DE)
(72) Inventor: Kirchner, Barbara, 97616 Bad Neustadt a.d.Saale (DE); Büttner, Steffen, 97616 Bad Neustadt a.d.Saale (DE); Rosin, Alexander, 97616 Bad Neustadt a.d.Saale (DE); Leontaris, Niko, 45500 Anatoli, Ioannina (GR); Svoboda, Michal, 43111 Jirkov (CZ); Grussmann, Ondrej, 25225 Zbuzany (CZ)

(57) **Abstract**

Transport cover (3), configured to be mounted to an electric machine (2), the electric machine (2) having a housing (4) with an end shield (5), a rotatable shaft (6) extending along a rotation axis (7) through the end shield (5) out of the housing (4) and a bearing (8) supporting the shaft (6) and mounted to the end shield (5), the transport cover (3) comprising
- a fixation section (11) fixable at the housing (4),
- a cover section (12) forming an accommodation space (14) for a stub (6a) of the shaft (6), and
- a through-hole (15) allowing to apply a lubricant from the outside of the transport cover (3) to the bearing (8) in a mounted state, in which the fixation section (11) is fixed at the housing (4).

## Description

The present invention relates to a transport cover, configured to be attached to an electric machine. Besides, the present invention relates to an arrangement with a transport cover and with an electric machine and to a method for operating an electric machine.

When manufacturing an integrated drive system with an electric machine and a gearbox attached to a housing of the electric machine, the manufacturing site for the electric machine may be different from a manufacturing site, where the gearbox is mounted to the electric machine. In this case, the electric machine with its shaft extending through an end shield of the housing has to be transported to the manufacturing site, where the gearbox is mounted. A corresponding integrated drive system is e.g. known from DE 10 2015 218 856 A1, which discloses an electric machine unit for an electric or hybrid vehicle having an electric machine that comprises a stator, a rotor shaft and an end shield with a bearing, that supports the rotor shaft, wherein the electric machine unit comprises a gearbox section formed as a separate section in axial extension of the rotor shaft.

It is an object of the present invention to provide a user-friendly transportation protection for an electric machine.

According to the present invention, this object is solved by a transport cover, configured to be mounted to an electric machine, the electric machine having a housing with an end shield, a rotatable shaft extending along a rotation axis through the end shield out of the housing and a bearing supporting the shaft and mounted to the end shield, the transport cover comprising a fixation section fixable at the housing, a cover section forming an accommodation space for a stub of the shaft, and a through-hole allowing to apply a lubricant from the outside of the transport cover to the bearing in a mounted state, in which the fixation section is fixed at the housing.

Another aspect of the invention is directed to an arrangement, comprising the inventive transport cover and an electric machine having a housing with an end shield, a rotatable shaft extending along a rotation axis through the end shield out of the housing and a bearing supporting the shaft and mounted to the end shield, the transport cover being mounted to the electric machine.

Preferably, the electric machine is configured to drive a vehicle, such as a battery electric vehicle or a hybrid vehicle. Particularly, the electric machine is capable of performing at least 10,000, 13,000, or even 16,000 revolutions per minute. The electric machine may rotate up to 18,000 rpm. The electric machine may be an electric motor. Particularly, the electric machine is an induction machine or a permanently excited synchronous machine. The end shield may be a drive end (DE) shield of the electric machine. The electric machine may also comprise a further end shield being a non-drive end (NDE) shield mounted on a side being opposite to the drive end shield of the housing. Particularly, the end shield comprises a, particularly annular, axial recess, into which the transport cover partially extends in the mounted state.

The transport cover according to the invention allows to mount the transport cover to the housing or the drive end shield while manufacturing the electric machine. When performing an end-of-line test of the electric machine, the lubricant, for instance, an oil can be applied to the bearing without dismounting the transport cover. Additionally, the transport cover can remain in its mounted state while rotating the shaft during the end-of-line test. Therein, the transport cover avoids that the lubricant splashes out of the electric machine and causes dirt in a test area. After having performed the end-of-line test, the electric machine with the fixed transport cover the can be transported to a different manufacturing site, where a gearbox can be attached to the housing of the electric machine. During the transport, the mounted transport cover protects the stub of the shaft from mechanical damages and avoids effectively that the remaining lubricant leaks out of the electric machine.

Advantageously, the transport cover according to the present invention integrates the function of an anti-splash protection for the end-of-line test and the function of a cover for transportation. Particularly in comparison to the use of an anti-splash being different from a cover for transportation, a working step of cleaning the electric machine between dismounting the anti-splash cover and mounting the cover for transportation can be avoided. Thus, only a single cleaning step is necessary at the manufacturing site, where the gearbox is mounted to the electric machine, after removing the transport cover according to the invention.

Preferably, the transport cover is configured to allow a rotation of the shaft inside the accommodation space in the mounted stage. The through-hole may be surrounded by an annular section of the transport cover configured to extend away from the bearing in the mounted state. Preferably, the transport cover is made of plastic.

Preferably, the cover section has a radial recess that partially surrounds the through-hole. Providing the radial recess to the cover section simplifies applying the lubricant to the bearing because the through-hole can be positioned closer to the rotation axis and, therefore, closer to the bearing.

Preferably, the transport cover according to the invention further comprises a plate-shaped section, in which the through-hole is formed. Advantageously, the plate-shaped section provides a robust mechanical basis for forming the through-hole. More preferably, the plate-shaped section extends into the recess of the cover section. Therein, the plate-shaped section can be completely or partially surrounded by the cover section.

Particularly, the plate-shaped section is configured to extend perpendicularly or substantially perpendicularly to the rotation axis in the mounted state.

The transport cover according to the invention preferably comprises an attachment section configured to abut on the end shield in the mounted state. Thereby, a contact face between the transport cover and the end shield is provided. Preferably, the attachment section has an annular shape.

Therein, the transport cover may further comprise a sealing member, preferably a sealing ring, configured to be attached between the end shield and the attachment section in the mounted state. The sealing member improves the capability of the transport cover to prevent that the lubricant leaks out of the housing of the electric machine during the end of line test and/or during the transport.

Therein, the attachment section may have a cylinder-shaped member that is configured to extend into the end shield in the mounted state, wherein the sealing member is arranged between the cylinder-shaped member and the end shield. Particularly, the recess of the end shield, the cylinder-shaped member and the sealing member are arranged coaxially.

Furthermore, the attachment section may have collar section extending axially away from the housing in the mounted state. The collar section may be formed to extend out of the recess of the housing in the mounted state.

The plate-shaped may be formed integrally with the attachment section. Thereby, the transport cover can made smaller in axial direction. Particularly, the recess extends in axial direction until the attachment section.

Alternatively, the plate-shaped section may extend from the cover section, particularly may be spaced from the attachment section.

The cover section of the transport cover according to the invention may have at least partially the shape of a cone or truncated cone. Particularly, the cover section has the shape of the cone or the truncated cone except in those parts, where the recess of the transportation cover is formed. The cone or truncated cone shape allows to form the accommodation space for the stub with a smaller diameter than the bearing or the recess of the housing, respectively.

Alternatively or additionally, the cone may prevent that the lubricant, in particular an oil, flows back to the bearing. During end of line testing, for instance, the lubricant, in particular the oil, may spread into the cone, and, due to the cone-shape of the cover section, may flow back to the bearing.

Preferably, the fixation section comprises two flange members each configured to extend radially with respect to the rotation axis in the mounted stage. The flange members preferably extend from the collar of the attachment section or from the cover section radially outwardly.

Additionally, stiffener members may be formed to the flange members and the cover section.

With respect to the transport cover according to the invention it is preferred that the fixation section comprises two fixation means that are arranged such that an imaginary line between them does not intersect with the rotation axis in the mounted state. In other words, the fixation means are arranged asymmetrically so that the transport cover has an integrated rotation prevention and can be mounted only in a specific alignment to the housing. Preferably, the fixation means are realized by through-holes formed in the flange members.

Preferably, the transport cover according to the invention further comprises one or multiple fixation elements configured to fixate the fixation section by means of a snap-fit to the housing. Using a snap-fit allows to mount and dismount the transport cover easily by the workers on the different manufacturing sites. More preferably, the fixation elements are configured to be inserted into fixation means on the housing of the electric machine. Particularly, the fixation means of the housing are configured to fix the gearbox at the housing of the electric machine after having removed the transport cover.

The transport cover according to the invention may further comprise a plug configured to close the through-hole. The plug allows to open and close the through-hole easily for applying the lubricant. Preferably, the plug is made of rubber. The plug may comprise a sealing nose, particularly an annular sealing nose. The sealing nose can be brought into contact with the annular section surrounding the through-hole.

The object is further solved by means of a method for operating an electric machine, the electric machine comprising a housing with an end shield, a rotatable shaft extending along a rotation axis through the end shield out of the housing and a bearing supporting the shaft and mounted to the end shield, the method comprising: mounting a transport cover according to the invention to the end shield such that the stub of the shaft is disposed in the accommodation space of the transport cover; applying a lubricant through the through-hole to the bearing; and rotating the shaft in the mounted state of the transport cover after having applied the lubricant.

Preferably, the method may comprise closing the through-hole by means of a plug after having applied the lubricant through the trough-hole and before rotating the shaft in the mounted state of the transport cover.

The object is in particular solved by means of a method for operating an electric machine, the electric machine comprising a housing with an end shield, a rotatable shaft extending along a rotation axis through the end shield out of the housing and a bearing supporting the shaft and mounted to the end shield, the method comprising:
- mounting the transport cover to the end shield such that the stub of the shaft is disposed in the accommodation space of the transport cover,
- applying a lubricant through the through-hole to the bearing,
- closing the through-hole by means of a plug; and
- rotating the shaft in the mounted state of the transport cover after having applied the lubricant and closing the through-hole by means of the plug.

Preferably, oil is used as the lubricant. The electric machine, i.e. its shaft, may be rotated with at least 10,000, 13,000, or at least 16,000 revolutions per minute. The electric machine may be able to rotate up to 18,000rpm.

Using the cover, the electric machine with the cover mounted on is better protected, for instance, when transported. Particularly, after having transported the electric machine and the transport cover in the mounted state, the method according to the invention may further comprise the following steps particularly after having rotated the shaft: removing the transport cover; and mounting a gear box to the electric machine.

All statements concerning the transport cover according to the invention apply analogously to the above method, so that advantages described with regard to the inventive arrangement can be realized by the inventive method as well.

Further details and advantages are described in the following, wherein reference is made to the attached drawings. The drawings are schematic drawings and show:
- Fig. 1: a plan view on a first embodiment of the arrangement according to the invention;
- Fig. 2: a detailed perspective view on the transport cover according to the first embodiment;
- Fig. 3: a cross-sectional view corresponding to a sectional plane III-III in Fig. 1;
- Fig. 4: a cross-sectional view corresponding to a sectional plane IV-IV in Fig. 1;
- Fig. 5: a plan view on a second embodiment of the arrangement according to the invention;
- Fig. 6: a perspective view on the transport cover according to the second embodiment;
- Fig. 7: a cross-sectional view corresponding to a sectional plane VII-VII in Fig. 5; and
- Fig. 8: a cross-sectional view corresponding to a sectional plane VIII-VIII in Fig. 5.

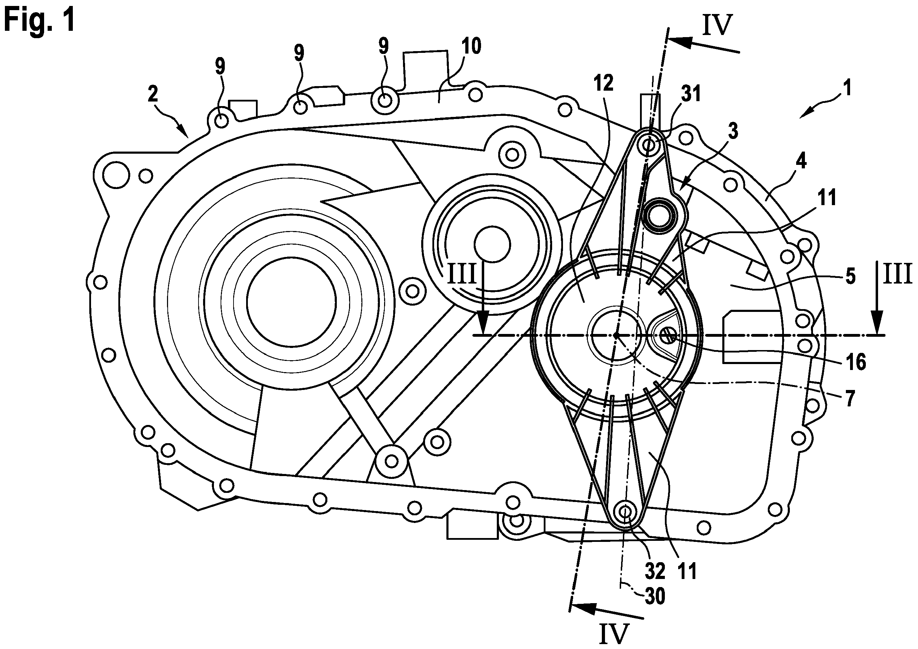

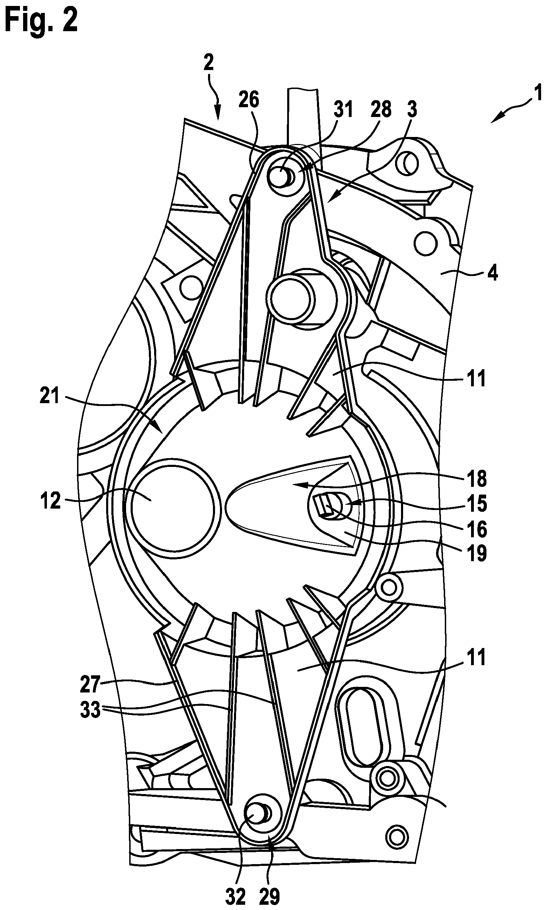

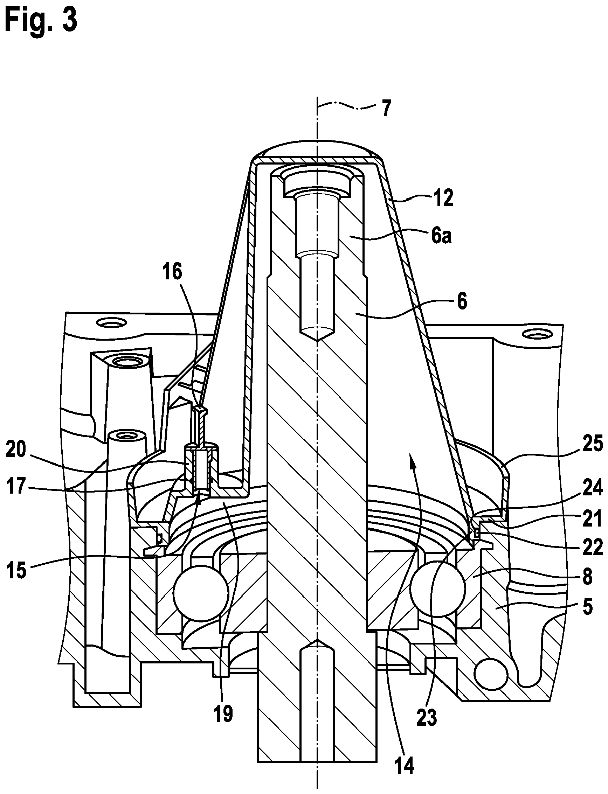

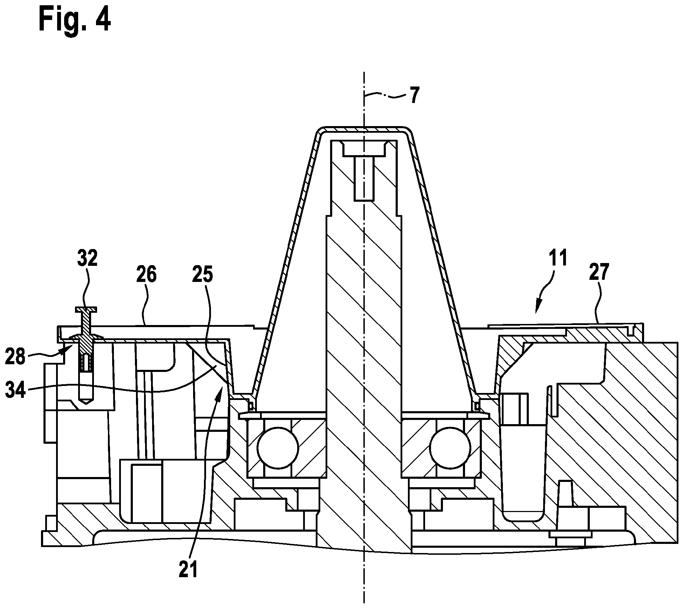

Fig. 1 to Fig. 4 show a first embodiment of the arrangement 1 with an electric machine 2 and a transport cover 3, wherein Fig. 1 is a plan view on the arrangement 1, Fig. 2 is detailed perspective view on the transport cover 3, Fig. 3 is a cross-sectional view corresponding to a sectional plane III-III in Fig. 1 and Fig. 4 is another sectional view corresponding to a sectional plane IV-IV in Fig. 1.

As shown in Fig. 1 and 2, the electric machine 2 comprises a housing 4 with an end shield 5 being a drive end (DE) shield. Furthermore, as can be seen in Fig. 3, the electric machine 2 comprises a rotatable shaft 6 extending along a rotation axis 7 through the end shield 5 out of the housing 4 and a bearing 8 supporting the shaft 6. The bearing 8 is mounted to the end shield 5.

The electric machine 2 is intended to be attached to a separate gear box (not shown), which may be mounted by means of a flange connection to the housing 4. Thereto, a plurality of fixation means 9 formed by through-holes may be provided in a flange section 10 of the housing 4. When the electric machine 2 is manufactured at a manufacturing site that is different from the one, where the gear box is attached to the electric machine, a stub 6a (see Fig. 3) of the shaft 6, which extends out of the housing 4, is protected from mechanical damages by means of the transport cover 3.

The transport cover 3 comprises a fixation section 11 that is fixable at the housing 4 and shown in a mounted state, in which the fixation section 11 is fixed at the housing. Furthermore, the transport cover 3 comprises a cover section 12, which may have the shape of a truncated cone as shown in Fig. 1 and 2 and forms an accommodation space 14 for the stub 6a, as can be seen in Fig. 3.

Additionally, the transport cover 3 comprises a through-hole 15 that allows to apply a lubricant, e.g. oil, from the outside of the transport cover 3 to the bearing 8 in the mounted state. In particular, the lubricant can be applied to the bearing 8 before an end-of-line test of the electric machine 2 before transporting it to the manufacturing site, where the gear box is attached. The transport cover 3 may remain in its mounted state during an end-of-line test, so that lubricant, which hurls away due a rotation of the shaft 6 within the end-of-line test, cannot cause dirt outside of the transport cover 3.

For the present embodiment, the transport cover 3 comprises a plug 16 made, for instance, from rubber. The plug 16 may comprise an annular sealing nose 17, and is configured to close the through-hole 15. The plug 16 can be removed when applying the lubricant and close the through-hole 15 thereafter, particularly during the end-of-line test and the transport.

As can be seen in detail in Fig. 2, the cover section 12 may have a radial recess 18 that at surrounds the through-hole 15. By providing the recess 18 the through-hole 15 can be positioned at a position that corresponds to the radial position of the part of the bearing 8, where the lubricant can be applied effectively. Moreover, the transport cover 3 may comprise a plate-shaped section 19, in which the through-hole is formed and which extends into the recess 18. The plate-shaped section 19 extends substantially perpendicularly to the rotation axis 7. Furthermore, the through-hole 15 may be surrounded by an annular section 20 that extends from the plate-shaped section 19 into a direction opposite to the bearing 8. The annular section 20 supports the plug 16 and forms a counterface for the sealing nose 17.

Preferably, the transport cover 3 also comprises an attachment section 21 configured to abut on the end shield 5 in the mounted state. The cover section 12 may extend from the attachment section 21 away from the end shield 5 in the mounted state. As can be seen in Fig. 2, in the axial direction the recess 18 does not extend to the position, where the attachment section 21 contacts the cover section 12. Thereby, the plate-shaped section 19 may form a socket being axially displaced from an abutting position of the attachment section 21 in the mounted state.

A sealing member 22 of the transport cover 3 may be configured to be arranged between the end shield 5 and the attachment section 21. The attachment section 21 may have a cylinder-shaped member 23 configured to extend into the end shield 5 in the mounted state, wherein the sealing member 22 is arranged between the end shield 5 and the attachment section 21 in the mounted state. Exemplarily, the sealing member 22 is formed by sealing ring arranged in an annular groove 24 of the attachment section 21 or the cylinder-shaped member 23, respectively. Furthermore, the attachment section 21 may have an annular collar 25 that extends away from the end shield 5 in the mounted state.

As can be seen best in Fig. 2 and Fig. 4, the fixation section 11 may comprise two flange members 26, 27 each configured to extend radially with respect to the rotation axis 7 in the mounted state. In the present embodiment, the flange members 26, 27 exemplarily extend from the collar 25 of the attachment section 21. Also, the fixation section 11 may comprise two fixation means 28, 29, each exemplarily formed by through-holes in a respective flange member 26, 27. As depicted in Fig. 1, the fixation means 28, 29 may arranged such that an imaginary line 30 between them does not intersect with the rotation axis 7 in the mounted state. This asymmetrical arrangement of the fixation means 28, 29 prevents that a worker mistakenly mounts the transport cover 3 turned by 180° to the end shield 5, according to the concept of "poka yoke".

Further, the fixation means 28, 29 may be arranged such that their positions match with the positions of two of the fixations means 9 of the housing 4. Thus, no additional fixation means beneath those for attaching the gearbox are needed to fixate the transport cover 3.

With reference to Fig. 2 and Fig. 4, the transport cover 3 may comprise two fixation elements 31, 32 configured to fixate the fixation section 11 by means of a snap-fit to the housing 4. In the present embodiment, the fixation elements 31, 32 are configured to extend through the fixation means 28, 29 of the fixation section 11 into the fixation means 9 of the housing 4 and to form a connection there.

The transport cover 3 may comprise a plurality of stiffener members 33 formed with the cover section 12 and the fixation section 11. The stiffener members 33 may be additionally be formed with attachment section 21. Further stiffener members 34 may be formed with the attachment section 21, particularly its collar 25, and the fixation section 11, particularly one of its flange members 26, 27.

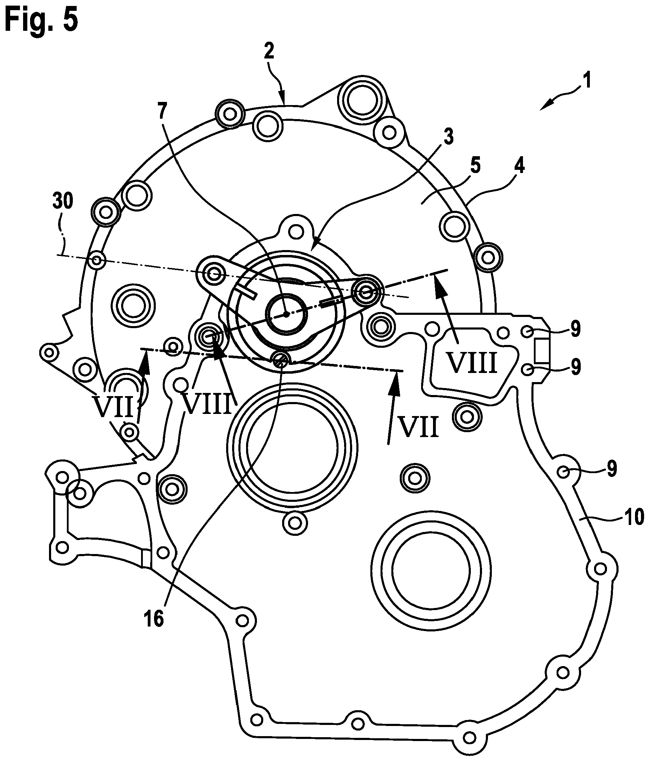

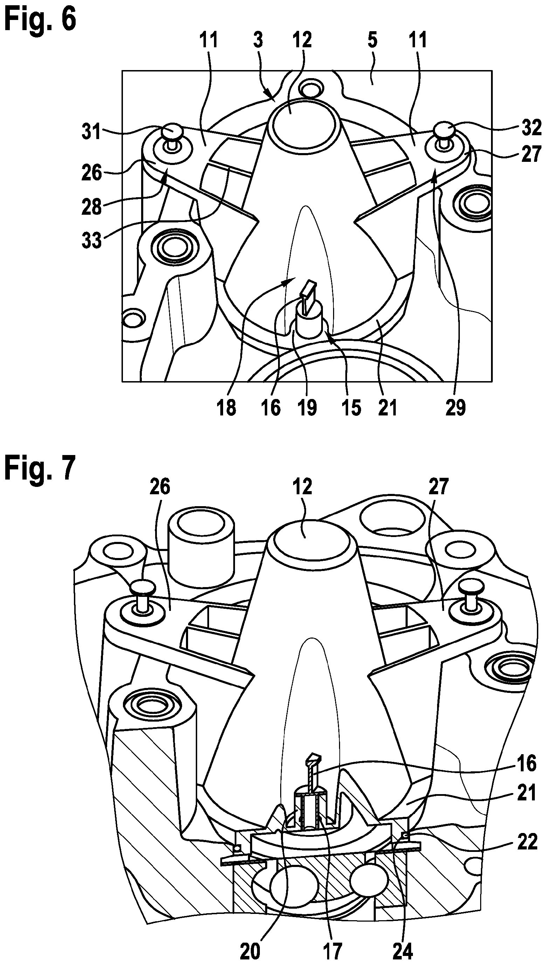

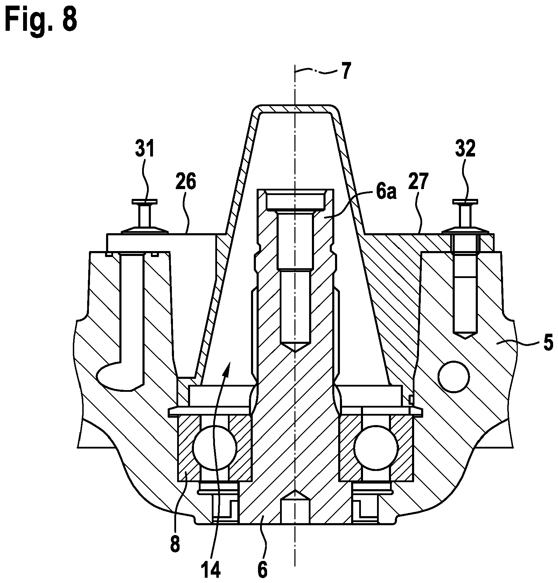

Fig. 5 to Fig. 8 show a second embodiment of the arrangement 1, wherein Fig. 5 is a plan view on the arrangement, Fig. 6 is a perspective view on the transport cover 3, Fig. 7 is a cross-sectional view corresponding to a sectional plane VII-VII in Fig. 5 and Fig. 8 is a cross-sectional view corresponding to a sectional plane VIII-VIII in Fig. 5. In the following only the significant differences of the second embodiment in comparison to the first embodiment are described, wherein identical or equivalent components are provided with the same reference numerals.

According to the second embodiment the plate-shaped section 19 may be formed integrally with the attachment section 21. Therein, the recess 18 may extend in axial direction until the attachment section 21. Furthermore, as it is apparent from Fig. 6 and Fig. 7, a collar of attachment section 21 may be omitted. Moreover, the flange members 26, 27 may extend directly from the cover section 12.

An embodiment of a method for operating the electric machine 2 is described in the following:
As a first step the transport cover 1 according to any of afore-mentioned embodiments is mounted to the end shield 5 such that the stub 6a of the shaft 6 is disposed in the accommodation space 14 of the transport cover 3. Next, the plug 16 may be removed from the through-hole 15. Then, the lubricant is applied through the through-hole 15 to the bearing 8. Thereafter, the plug 16 may be disposed into the through-hole 15 so as to close it. As a next step the shaft 6 is rotated, e.g. with 14,000 to 18,000 revolutions per minute, in the mounted state of the transport cover 3 in order to perform the end-of-line test.

When the end-of-line test is completed, the electric machine 2 and the transport cover 3 in the mounted state may be transported. Particularly after the electric machine 2 has arrived at another manufacturing site, the transport cover 3 is removed. The end shield 5 may be cleaned from remaining lubricant, if necessary. As a next step, the gear box is mounted to the electric machine 2.

## Claims

1. Transport cover (3), configured to be mounted to an electric machine (2), the electric machine (2) having a housing (4) with an end shield (5), a rotatable shaft (6) extending along a rotation axis (7) through the end shield (5) out of the housing (4) and a bearing (8) supporting the shaft (6) and mounted to the end shield (5), the transport cover (3) comprising
- a fixation section (11) fixable at the housing (4),
- a cover section (12) forming an accommodation space (14) for a stub (6a) of the shaft (6), and
- a through-hole (15) allowing to apply a lubricant from the outside of the transport cover (3) to the bearing (8) in a mounted state, in which the fixation section (11) is fixed at the housing (4).

2. Transport cover according to claim 1, wherein the cover section (12) has a radial recess (18) that at least partially surrounds the through-hole (15).

3. Transport cover according to claim 2, further comprising a plate-shaped section (19), in which the through-hole (15) is formed and which extends into the recess (18).

4. Transport cover according to claim 3, wherein the plate-shaped section (19) is configured to extend substantially perpendicularly to the rotation axis (7) in the mounted state.

5. Transport cover according to any of the preceding claims, further comprising an attachment section (21) configured to abut on the end shield (5) in the mounted state.

6. Transport cover according to claim 5, further comprising a sealing member (22), preferably a sealing ring, configured to be arranged between the end shield (5) and the attachment section (21) in the mounted state.

7. Transport cover according to claim 6, wherein the attachment section (21) has a cylinder-shaped member (23) configured to extend into the end shield (5) in the mounted state, wherein the sealing member (22) is arranged between the cylinder-shaped member (23) and the end shield (5).

8. Transport cover according to any of the preceding claims, wherein the cover section (12) has at least partially the shape of a cone or of a truncated cone.

9. Transport cover according to any of the preceding claims, wherein the fixation section (11) comprises two flange members (26, 27) each configured to extend radially with respect to the rotation axis (7) in the mounted state.

10. Transport cover according to any of the preceding claims, wherein the fixation section (11) comprises two fixation means (28, 29) that are arranged such that an imaginary line (30) between them does not intersect with the rotation axis (7) in the mounted state, and/or one or multiple fixation elements (31, 32) configured to fixate the fixation section (11) by means of a snap-fit to the housing (4).

11. Transport cover according any of the preceding claims, further comprising a plug (16) configured to close the through-hole (15).

12. Arrangement, comprising a transport cover according to any of the preceding claims and an electric machine (2) having a housing (4) with an end shield (5), a rotatable shaft (6) extending along a rotation axis (7) through the end shield (5) out of the housing (4) and a bearing (8) supporting the shaft (6) and mounted to the end shield (5), the transport cover (3) being mounted to the electric machine (2).

13. Method for operating an electric machine (2), the electric machine (2) comprising a housing (4) with an end shield (5), a rotatable shaft (6) extending along a rotation axis (7) through the end shield (5) out of the housing (4) and a bearing (8) supporting the shaft (6) and mounted to the end shield (5), the method comprising:
- mounting a transport cover (3) according to any of claims 1 to 11 to the end shield (5) such that the stub (6a) of the shaft (6) is disposed in the accommodation space (14) of the transport cover (3);
- applying a lubricant through the through-hole (15) to the bearing; and
- rotating the shaft (6) in the mounted state of the transport cover (3) after having applied the lubricant.

14. Method according to claim 13, comprising closing the through-hole (15) by means of a plug (16) after having applied the lubricant through the trough-hole (15) and before rotating the shaft (6) in the mounted state of the transport cover (3).

15. Method according to claim 13 or 14, further comprising after rotating the shaft (6):
- removing the transport cover (3), and
- mounting a gear box to the electric machine (2).
